# EUROPÄISCHE PATENTANMELDUNG

(11) **EP 2 333 473 A2**
(43) Veröffentlichungstag der Anmeldung: **15.06.2011**
(21) Anmeldenummer: 10186659.8
(22) Anmeldetag: 06.10.2010
(51) Int. Cl.: F28D 7/10, F28D 9/00, F28F 3/04

(54) **Wärmeübertragungsvorrichtung sowie Wärmeübertragungsvorproduktanordnung und Verfahren zur Herstellung einer derartigen Wärmeübertragungsvorrichtung**

(30) Priorität: 27.11.2009 DE 102009055931
(71) Anmelder: Pierburg GmbH, 41460 Neuss (DE)
(72) Erfinder: Hüsges, Hans-Jürgen, 47877 Willich (DE); Kühnel, Hans-Ulrich, 41239 Mönchengladbach (DE)
(74) Vertreter: Ter Smitten, Hans

(57) **Zusammenfassung**

Bekannte Wärmeübertragungsvorrichtungen weisen häufig eine nicht ausreichende Festigkeit bei steigenden Innendrücken auf.

Es wird daher eine Wärmeübertragungsvorrichtung vorgeschlagen, bei der an der Grundfläche (18) des zweiten Gehäuseteils (14) eine Schweißnaht (44) ausgebildet ist, welche sich durch die Grundfläche (18) des zweiten Gehäuseteils (14) zu einem von der Grundfläche (16) des ersten Gehäuseteils (12) entfernten Ende (26) der Trennwand (22) erstreckt, so dass die Trennwand (22) am zweiten Gehäuseteil (14) über die Schweißnaht (44) befestigt ist. Als Vorprodukt weist erfindungsgemäß die Grundfläche (18) des zweiten Gehäuseteils (14) eine Nut (36) auf, in welche ein zur Nut (36) korrespondierender verjüngter Abschnitt (30) der Trennwand (22) ragt, der am von der Grundfläche (16) des ersten Gehäuseteils (12) entfernten Ende (26) angeordnet ist.

So kann die mögliche Druckbelastung einer Wärmeübertragungsvorrichtung deutlich gesteigert werden.

## Beschreibung

Die Erfindung betrifft eine Wärmeübertragungsvorrichtung für eine Verbrennungskraftmaschine bestehend aus einem Innengehäuse, welches ein erstes Gehäuseteil und ein zweites Gehäuseteil aufweist, deren Grundflächen einander gegenüberliegend und beabstandet voneinander angeordnet sind und welche fest miteinander verbunden sind, so dass im Innern des Innengehäuses ein von einem ersten Medium durchströmbarer Kanal ausgebildet ist, einer Trennwand, welche sich von der Grundfläche des ersten Gehäuseteils bis zur Grundfläche des zweiten Gehäuseteils erstreckt und einem Außengehäuse, welches derart das Innengehäuse umgebend angeordnet ist, dass zwischen dem Außengehäuse und dem Innengehäuse ein zweiter, von einem zweiten Medium durchströmbarer Kanal ausgebildet ist, einer Wärmeübertragungsvorproduktanordnung zur Herstellung einer derartigen Wärmeübertragungsvorrichtung sowie ein Verfahren zur Herstellung einer derartigen Wärmeübertragungsvorrichtung mit einer derartigen Wärmeübertragungsvorproduktanordnung.

Wärmeübertragungsvorrichtungen sind allgemein bekannt, wobei unterschiedliche Herstellungsverfahren verwendet werden. Insbesondere im Bereich der Automobil- und Motorentechnik gewinnen Wärmeübertragungsvorrichtungen zusehends an Wichtigkeit. Sie werden sowohl zur Kühlung rückgeführten Abgases als auch zur Ladeluftkühlung oder Ölkühlung benutzt. Durch die Verwendung derartiger Wärmeübertragungsvorrichtungen kann beispielsweise die Temperatur des zum Zylinder geführten Gases herabgesetzt werden und somit die Füllung der Zylinder und der Wirkungsgrad der Verbrennungsmotoren verbessert werden.

Neben anderen Verfahren zur Herstellung von Wärmeübertragungsvorrichtungen ist es bekannt, im Druckguss hergestellte Schalen mit jeweils sich von den Grundflächen der Schalen erstreckenden Rippen zu Wärmeübertragungsvorrichtungen zusammen zu setzen. Das zu kühlende Medium durchströmt zumeist das Innengehäuse der Wärmeübertragungsvorrichtung, während zwischen dem Innengehäuse und einem das Innengehäuse an zumindest vier Seiten umgebenden Außengehäuse ein Kanal für ein Kühlmedium entsteht.

So wird in der DE 10 2005 058 204 A1 eine Wärmeübertragungsvorrichtung offenbart, welche ein U-förmig durchströmtes Gehäuse aufweist, so dass Ein- und Austritt des zu kühlenden Gases an der Kopfseite der Wärmeübertragungsvorrichtung nebeneinander angeordnet sind. Diese Wärmeübertragungsvorrichtung ist aus einem Innengehäuse und einem Außengehäuse aufgebaut, welche ineinander geschoben werden. Sowohl das Außengehäuse als auch das Innengehäuse bestehen aus einem Oberteil und einem Unterteil, welche durch Schweißen vor dem Zusammenbau des Innengehäuses mit dem Außengehäuse miteinander verbunden werden. Das hier offenbarte Innengehäuse weist an seinem Oberteil und an seinem Unterteil jeweils in den vom zu kühlenden Gas durchströmten Kanal ragende Rippen auf, welche sich im Querschnitt des Innengehäuses abwechselnd vom Oberteil bzw. vom Unterteil in den Kanal erstrecken. Das Oberteil ist dabei deckelförmig ausgeführt, während das Unterteil eine Topfform aufweist. Das Deckelteil wird über eine Schweißnaht am Unterteil befestigt, die sich über den gesamten Umfang des Deckelteils erstreckt.

Zur Herstellung derartiger Teile im Druckgussverfahren ist es notwendig, das Unterteil mit einer oberen Gehäuseteilwand im Bereich der Kopfseite auszuführen, da ansonsten keine umlaufende Schweißnaht erreicht werden könnte. Dies bedeutet jedoch gleichzeitig, dass ein zusätzlicher seitlicher Schieber, der zur Kopfseite entfernt wird, benötigt wird, um ein derartiges Unterteil herzustellen. Ein weiterer Schieber wird in Erstreckungsrichtung der Rippen nach oben aus dem Unterteil herausgeführt.

Eine derartige Wärmeübertragungsvorrichtung weist jedoch den Nachteil auf, dass die vorhandene druckbelastete Sprengfläche, welche durch das Deckelteil gebildet wird, relativ groß ist. Die Belastung des Innengehäuses und der vorhandenen Schweißnähte kann bei Verwendung einer derartigen Konstruktion im Lkw-Bereich und somit bei höheren auftretenden Wärmetauscherinnendrücken zu Leckagen am Wärmetauscher oder sogar zum Losbrechen des Deckelteils führen.

Es ist daher Aufgabe der Erfindung, eine Wärmeübertragungsvorrichtung bereitzustellen, die auch bei hohen Innendrücken, wie sie im Lkw-Bereich auftreten, einsetzbar ist und entsprechend eine hohe Festigkeit aufweist. Hierzu sollen auch die notwendigen Anordnungen der Vorprodukte zueinander sowie ein Verfahren zur Herstellung einer derartigen Wärmeübertragungsvorrichtung bereitgestellt werden.

Diese Aufgabe wird durch eine Wärmeübertragungsvorrichtung gelöst, bei der an der Grundfläche des zweiten Gehäuseteils eine Schweißnaht ausgebildet ist, welche sich durch die Grundfläche des zweiten Gehäuseteils zu einem von der Grundfläche des ersten Gehäuseteils entfernten Ende der Trennwand erstreckt, so dass die Trennwand am zweiten Gehäuseteil über die Schweißnaht befestigt ist. Somit wird die Sprengfläche des Innengehäuses deutlich reduziert und somit die Festigkeit gesteigert.

Vorzugsweise teilt die Trennwand den Kanal im Innengehäuse im Querschnitt zur Durchströmungsrichtung in zwei im Wesentlichen gleich große Teile. Auf diese Weise steht weiterhin ein ausreichend großer Querschnitt für Austauschströmungen aufgrund von Wirbelbildung an vorhandenen Rippen im Kanal zur Verfügung, so dass weiterhin ein guter Wirkungsgrad erreicht wird.

In einer vorteilhaften Ausgestaltung der Erfindung erstreckt sich die Trennwand in Durchströmungsrichtung im Wesentlichen über die Länge des Innengehäuses. Dies erhöht die Festigkeit im Vergleich zu Versionen mit unterbrochenen Trennwänden.

In einer besonderen Ausgestaltung erstreckt sich eine Schweißnaht entlang des Umfangs des zweiten Gehäuseteils, über welche das erste Gehäuseteil am zweiten Gehäuseteil befestigt ist. Eine solche Befestigung ist insbesondere bei deckelförmigen zweiten Gehäuseteilen in einem Herstellungsschritt mit der Befestigung der Trennwand zu vollziehen. Dies reduziert die Herstellkosten bei vollständiger Dichtigkeit des Gehäuses.

Vorzugsweise weist die Trennwand im Wesentlichen senkrecht zur Strömungsrichtung verlaufende Stufen auf. Diese Stufen dienen zur Verminderung der Versottung bei der Verwendung einer derartigen Wärmeübertragungsvorrichtung beispielsweise als Abgaskühler. An den Stufen wird die Grenzschicht der Strömung aufgebrochen, so dass Wirbel entstehen, die einer Versottung entgegenwirken.

Die gestellte Aufgabe wird erfindungsgemäß mittels einer Wärmeübertragungsvorproduktanordnung zur Herstellung einer Wärmeübertragungsvorrichtung gelöst, bei der die Grundfläche des zweiten Gehäuseteils eine Nut aufweist, in welche ein zur Nut korrespondierender, verjüngter Abschnitt der Trennwand ragt, der am von der Grundfläche des ersten Gehäuseteils entfernten Ende angeordnet ist. Durch diese Ausbildung kann sowohl die Zentrierung des ersten Gehäuseteils zum zweiten vor der endgültigen Befestigung durch eine Art Formschluss festgelegt werden als auch die Befestigung selbst durch Schweißen deutlich erleichtert werden, da beim Rührreibschweißvorgang sichergestellt wird, dass eine stoffschlüssige Verbindung zur Trennwand entsteht.

Vorzugsweise ist am von der Grundfläche des ersten Gehäuseteils entfernten Ende der Trennwand ein Absatz ausgebildet, auf dem ein die Nut der Grundfläche des zweiten Gehäuseteils umgebender Abschnitt aufliegt. Durch diese Auflage entstehen keine Spannungen im Gehäuseteil durch die beim Rührreibschweißen aufzubringenden Druckkräfte, da sich das durch das Werkzeug druckbelastete zweite Gehäuseteil auf dem Absatz abstützen kann.

Vorteilhafterweise entspricht die Tiefe der Nut der Dicke der Grundfläche des zweiten Gehäuseteils, so dass die Nut eine durchgehende Öffnung bildet, in die das Rührreibschweißwerkzeug direkt eingeführt werden kann. Dies erschwert zwar die Herstellung des zweiten Gehäuseteils, verringert jedoch die aufzubringenden Schweißkräfte.

In einer besonders bevorzugten Ausführung ist das zweite Gehäuseteil als Deckel ausgeführt, der mit seinem Umfang auf einem Absatz aufliegt, der an einem Ende von Seitenwänden ausgebildet ist, die sich vom Umfang der Grundfläche des ersten Gehäuseteils in Richtung zum Deckel erstrecken. So wird eine Auflage über den gesamten Umfang des Deckels sichergestellt, so dass wiederum der Absatz als Auflage beim Schweißen genutzt werden kann, um die Druckkräfte aufzunehmen.

Die Aufgabe wird entsprechend durch ein Verfahren zur Herstellung einer derartigen Wärmeübertragungsvorrichtung mit einer derartigen Wärmeübertragungsvorproduktanordnung gelöst, bei dem ein Rührreibschweißwerkzeug an einem Ende der Nut von der zur Nut entgegengesetzten Seite der Grundfläche des zweiten Gehäuseteils bis in die Nut eingeführt wird und anschließend entlang der Nut auf der Trennwand geführt wird. So wird die zuverlässige Befestigung des zweiten Gehäuseteils am ersten Gehäuseteil sichergestellt, die Sprengfläche verkleinert, so dass ein derartiger Wärmetauscher auch im höher druckbelasteten LKW-Bereich eingesetzt werden kann.

Die erfindungsgemäße Wärmeübertragungsvorrichtung, die erfindungsgemäße Wärmeübertragungsvorproduktanordnung und das entsprechende Verfahren sorgen für eine kostengünstige Herstellung eines hochbelastbaren Wärmetauschers, der auch im Abgasbereich eines Lastkraftwagen eingesetzt werden kann und einen guten Wirkungsgrad bei geringer Versottung aufweist.

Ein Ausführungsbeispiel ist in den Zeichnungen dargestellt und wird nachfolgend beschrieben:
Figur 1 zeigt im Querschnitt eine erfindungsgemäße Wärmeübertragungsvorrichtung in geschnittener Darstellung.
Figur 2 zeigt eine geschnittene Darstellung eines ersten und eines zweiten Gehäuseteils der erfindungsgemäßen Wärmeübertragungsvorrichtung aus Figur 1 im Querschnitt zur Durchströmungsrichtung vor dem Zusammenbau.
Figur 3 zeigt eine Draufsicht auf das erste Gehäuseteil.

Die erfindungsgemäße Wärmeübertragungsvorrichtung besteht aus einem Innengehäuse 2, welches von einem Außengehäuse 4 zumindest im Querschnitt umgeben ist. Beide Gehäuseteile sind mehrteilig ausgeführt und im Druckgussverfahren hergestellt.

Im Innern des Innengehäuses 2 ist ein erster von einem Medium durchströmbarer Kanal 6 ausgebildet, der beispielsweise von Abgas durchströmt wird und in den Rippen 8 zur Verbesserung des Wärmeübergangs ragen. Das Außengehäuse 4 ist beabstandet zum Innengehäuse befestigt, so dass zwischen dem Innengehäuse 2 und dem Außengehäuse 4 ein mantelförmiger, von einem zweiten Medium, beispielsweise einem Kühlmittel, durchströmbarer Kanal 10 entsteht. In diesem Kanal 10 können Stege angeordnet werden, um Gebiete ohne Strömung zu vermeiden.

Das Innengehäuse 2 weist ein erstes Gehäuseteil 12, welches im Querschnitt nach drei Seiten geschlossen ist und ein zweites Gehäuseteil 14 auf, welches als Deckelteil zum Verschließen der offenen Seite des ersten Gehäuseteils 12 ausgeführt ist. Sowohl von einer Grundfläche 16 des ersten Gehäuseteils 12 als auch von einer Grundfläche 18 des zweiten Gehäuseteils 14 ragen die Rippen 10 im Querschnitt abwechselnd jeweils in Richtung zur gegenüberliegenden Grundfläche 18, 16 in den Kanal 6. Die Rippen 10 sind in Durchströmungsrichtung 20 unterbrochen, wobei die jeweiligen Rippenreihen versetzt zueinander angeordnet sind.

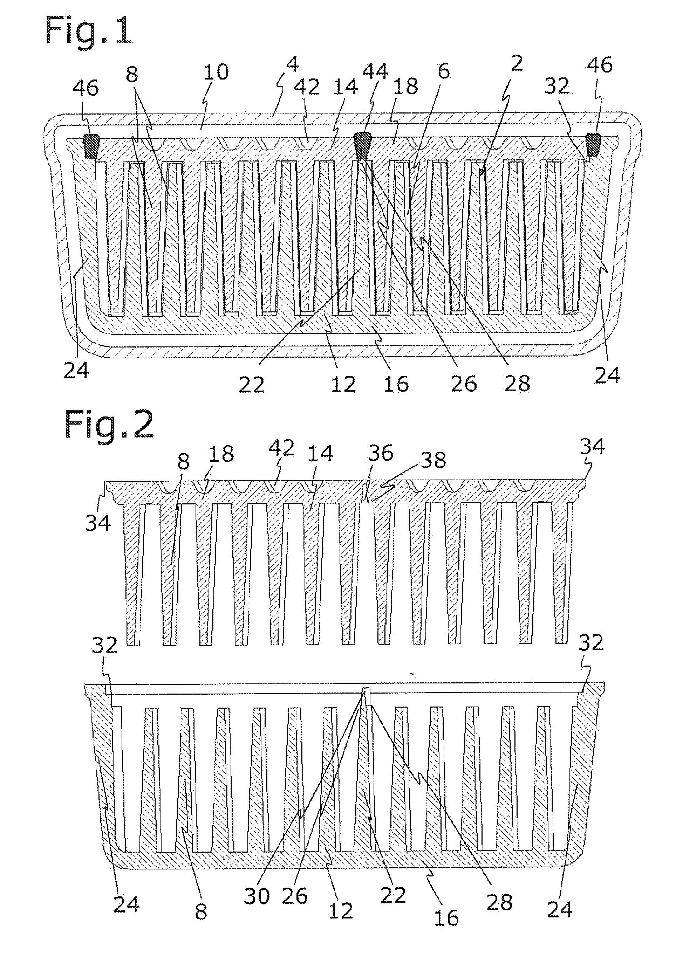

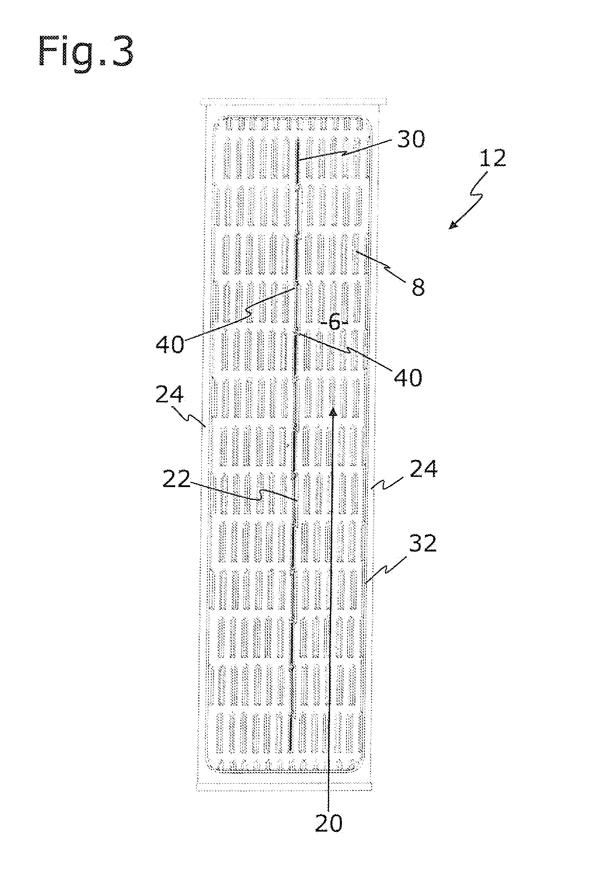

In Figur 2 ist das erste Gehäuseteil 12 dargestellt. Neben den sich in den Kanal 6 ersteckenden Rippen 10 ist etwa in der Mitte des Kanals 6 eine Trennwand 22 ausgebildet, welche sich über die Länge des Kanals 6 zu beiden Enden bis kurz vor das jeweilige Ende des Kanals 6 erstreckt und den Kanal 6 im Querschnitt in zwei etwa gleich große Teile teilt, wie auch in Figur 3 zu erkennen ist. Diese Trennwand 22 erstreckt sich, wie auch die Rippen 10 und die das Innengehäuse 2 seitlich begrenzenden Seitenwände 24 im Wesentlichen senkrecht zur Grundfläche 16 des ersten Gehäuseteils 12 in Richtung zur gegenüberliegenden zweiten Grundfläche 18 des Gehäuseteils 14.

Die Trennwand 22 weist an ihrem von der Grundfläche 16 entfernten und zum zweiten Gehäuseteil 14 weisenden Ende 26 einen Absatz 28 auf, von dem aus sich ein oberer Abschnitt 30 der Trennwand 22 deutlich verjüngt weiter erstreckt. Auch an den Seitenwänden 24 ist jeweils in gleicher Höhe wie an der Trennwand 22 ein sich über den Umfang erstreckender Absatz 32 ausgebildet. Von diesem Absatz 32 aus erstrecken sich die Seitenwände 24 lediglich in ihrem äußeren Bereich weiter nach oben.

In Figur 2 ist auch das korrespondierende zweite Gehäuseteil 14 dargestellt, welches im zusammengebauten Zustand mit seinem Außenumfang 34 auf dem umlaufenden Absatz 32 des ersten Gehäuseteils 12 aufliegt. Des Weiteren ist in der Grundfläche 18 des zweiten Gehäuseteils 14 eine sich in Strömungsrichtung erstreckende Nut 36 ausgebildet, deren Länge und Breite im Wesentlichen der Ausdehnung des verjüngten Abschnitts 30 der Trennwand 22 oberhalb des Absatzes 28 entspricht, so dass dieser verjüngte Abschnitt 30 in die Nut 36 hineinragt während ein die Nut begrenzender Abschnitt 38 des Deckelteils 14 auf dem Absatz 28 aufliegt.

In der Figur 3 ist zusätzlich zu erkennen, dass an der Trennwand 22 senkrecht zur Durchströmungsrichtung 20 verlaufende Stufen 40 ausgebildet sind, an denen eine Wirbelbildung entsteht, die eine Versottung verhindert. Diese Stufen 40 wechseln sich ab mit stetigen Erweiterungen, so dass an der Trennwand 22 im Wesentlichen halbe Rippen 8 gebildet werden. Aus den Figuren 1 und 2 ist zusätzlich ersichtlich, dass die Grundflächen 16, 18 der Gehäuseteile 12, 14 an der zum Außengehäuse 4 weisenden Seite jeweils in Höhe der Rippen 8 Einbuchtungen 42 aufweisen, durch die das Kühlmittel näher zu den Rippen 8 und somit zum zu kühlenden Medium geführt werden kann. Des Weiteren weist eine solche Form Strömungsvorteile beim Druckgießen auf.

Wird nun das zweite Gehäuseteil 14 auf das erste Gehäuseteil 12 aufgesetzt, entsteht hierdurch eine erfindungsgemäße Wärmeübertragungsvorproduktanordnung. Zur Herstellung einer erfindungsgemäßen Wärmeübertragungsvorrichtung wird nun sowohl entlang des Außenumfangs 34 des zweiten Gehäuseteils 14 als auch von der entgegengesetzten Seite der Nut 36 ein Rührreibschweißwerkzeug bis in die Nut 36 eingeführt und anschließend entlang der Länge der Nut 36 geführt, so dass eine stoffschlüssige Verbindung der beiden Gehäuseteile 12, 14 sowohl entlang des Umfangs 34 als auch entlang der Trennwand 22 beziehungsweise der mit der Trennwand 22 korrespondierenden Nut 36 entsteht. Der notwendige auf das zweite Gehäuseteil 14 aufzubringende Druck des Rührreibschweißwerkzeugs kann dabei durch das Aufliegen des zweiten Gehäuseteils 14 auf den Absätzen 28, 32 des ersten Gehäuseteils 12 vom ersten Gehäuseteil 12 auch dann noch aufgenommen werden, wenn die Nut 36 als durchgehende Öffnung des zweiten Gehäuseteils 14 ausgebildet ist. Entlang der Nut 36 kann dabei je nach gewünschter Breite das Rührreibschweißwerkzeug entweder einmal oder zweimal über beziehungsweise durch die Nut 36 geführt werden. Durch die dabei entstehende Schweißnaht 44, welche in Figur 1 zu erkennen ist, entsteht eine stoffschlüssige Verbindung im mittleren Bereich der beiden Gehäuseteile 12, 14, durch die umlaufende Schweißnaht 46 eine stoffschlüssige Verbindung über den Umfang 34 des zweiten Gehäuseteils 14.

Dies halbiert die zur Verfügung stehende Sprengfläche bei erhöhtem Innendruck, so dass eine deutlich erhöhte Festigkeit des Innengehäuses 2 erzielt wird. Eine derartige Wärmeübertragungsvorrichtung kann im Abgassystem eines Lastkraftwagen auch bei den dort vorliegende höheren Drücken eingesetzt werden. Dabei bleibt die Herstellung kostengünstig und der Wirkungsgrad gut.

Es sollte deutlich sein, dass konstruktive Änderungen bezüglich der Ausführung eines derartigen Wärmetauschers innerhalb des Schutzbereiches der Ansprüche möglich sind. Insbesondere können die Teilungsebenen der einzelnen Schalen oder die Ausführung der Rippen anders gewählt werden. Auch ist es selbstverständlich möglich, bei einem U-förmig durchströmten Kühler, die Trennwand, welche Vor- und Rücklauf voneinander trennt, in der erfindungsgemäßen Form auszuführen. Die Nut kann in einer Tiefe ausgeführt werden, die der Dicke der Grundfläche des zweiten Gehäuseteils entspricht, so dass die Trennwand durch die Grundfläche ragt.

## Patentansprüche

1. Wärmeübertragungsvorrichtung für eine Verbrennungskraftmaschine bestehend aus
einem Innengehäuse, welches ein erstes Gehäuseteil und ein zweites Gehäuseteil aufweist, deren Grundflächen einander gegenüberliegend und beabstandet voneinander angeordnet sind und welche fest miteinander verbunden sind, so dass im Innern des Innengehäuses ein von einem ersten Medium durchströmbarer Kanal ausgebildet ist,
einer Trennwand, welche sich von der Grundfläche des ersten Gehäuseteils bis zur Grundfläche des zweiten Gehäuseteils erstreckt, und einem Außengehäuse, welches derart das Innengehäuse umgebend angeordnet ist, dass zwischen dem Außengehäuse und dem Innengehäuse ein zweiter von einem zweiten Medium durchströmbarer Kanal ausgebildet ist,
**dadurch gekennzeichnet, dass**
an der Grundfläche (18) des zweiten Gehäuseteils (14) eine Schweißnaht (44) ausgebildet ist, welche sich durch die Grundfläche (18) des zweiten Gehäuseteils (14) zu einem von der Grundfläche (16) des ersten Gehäuseteils (12) entfernten Ende (26) der Trennwand (22) erstreckt, so dass die Trennwand (22) am zweiten Gehäuseteil (14) über die Schweißnaht (44) befestigt ist.

2. Wärmeübertragungsvorrichtung für eine Verbrennungskraftmaschine nach Anspruch 1,
**dadurch gekennzeichnet, dass**
die Trennwand (22) den Kanal (6) im Innengehäuse (4) im Querschnitt zur Durchströmungsrichtung (20) in zwei im Wesentlichen gleich große Teile teilt.

3. Wärmeübertragungsvorrichtung für eine Verbrennungskraftmaschine nach einem der Ansprüche 1 oder 2,
**dadurch gekennzeichnet, dass**
sich die Trennwand (22) in Durchströmungsrichtung (20) im Wesentlichen über die Länge des Innengehäuses (4) erstreckt.

4. Wärmeübertragungsvorrichtung für eine Verbrennungskraftmaschine nach einem der vorhergehenden Ansprüche,
**dadurch gekennzeichnet, dass**
sich eine Schweißnaht (46) entlang des Umfangs (34) des zweiten Gehäuseteils (14) erstreckt, über welche das erste Gehäuseteil (12) am zweiten Gehäuseteil (14) befestigt ist.

5. Wärmeübertragungsvorrichtung für eine Verbrennungskraftmaschine nach einem der vorhergehenden Ansprüche,
**dadurch gekennzeichnet, dass**
die Trennwand (22) im Wesentlichen senkrecht zur Strömungsrichtung (20) verlaufende Stufen (40) aufweist.

6. Wärmeübertragungsvorproduktanordnung zur Herstellung einer Wärmeübertragungsvorrichtung gemäß einem der vorhergehenden Ansprüche,
**dadurch gekennzeichnet, dass**
die Grundfläche (18) des zweiten Gehäuseteils (14) eine Nut (36) aufweist, in welche ein zur Nut (36) korrespondierender verjüngter Abschnitt (30) der Trennwand (22) ragt, der am von der Grundfläche (16) des ersten Gehäuseteils (12) entfernten Ende (26) angeordnet ist.

7. Wärmeübertragungsvorproduktanordnung nach Anspruch 6,
**dadurch gekennzeichnet, dass**
am von der Grundfläche (16) des ersten Gehäuseteils (12) entfernten Ende (26) der Trennwand (22) ein Absatz (28) ausgebildet ist, auf dem ein die Nut (36) der Grundfläche (18) des zweiten Gehäuseteils (14) umgebender Abschnitt (38) aufliegt.

8. Wärmeübertragungsvorproduktanordnung nach einem der Ansprüche 6 oder 7,
**dadurch gekennzeichnet, dass**
die Tiefe der Nut (36) der Dicke der Grundfläche (18) des zweiten Gehäuseteils (14) entspricht, so dass die Nut (36) eine durchgehende Öffnung bildet.

9. Wärmeübertragungsvorproduktanordnung nach einem der Ansprüche 6 bis 8,
**dadurch gekennzeichnet, dass**
das zweite Gehäuseteil (14) als Deckel ausgeführt ist, der mit seinem Umfang (34) auf einem Absatz (32) aufliegt, der an einem Ende von Seitenwänden (24) ausgebildet ist, die sich vom Umfang der Grundfläche (16) des ersten Gehäuseteils (12) in Richtung zum Deckel (14) erstrecken.

10. Verfahren zur Herstellung einer Wärmeübertragungsvorrichtung gemäß einem der Ansprüche 1 bis 5 mit einer Wärmeübertragungsvorproduktanordnung gemäß einem der Ansprüche 6 bis 9, bei dem ein Rührreibschweißwerkzeug an einem Ende der Nut (36) von der zur Nut (36) entgegengesetzten Seite der Grundfläche (18) des zweiten Gehäuseteils (14) bis in die Nut (36) eingeführt wird und anschließend entlang der Nut (36) auf der Trennwand (22) geführt wird.
